# EUROPEAN PATENT SPECIFICATION

(11) **EP 3 063 213 B1**
(45) Date of publication and mention of the grant of the patent: **27.02.2019**
(21) Application number: 14781540.1
(22) Date of filing: 07.10.2014
(51) Int. Cl.: C08J 5/08, B29B 9/14, B29C 47/02, B29C 47/06

(54) **GLASS FIBRE REINFORCED POLYOLEFIN COMPOSITION**
GLASFASERVERSTÄRKTE POLYOLEFINZUSAMMENSETZUNG
COMPOSITION DE POLYOLÉFINE RENFORCÉE PAR FIBRES DE VERRE

(30) Priority: 29.10.2013 EP 13190576
(43) Date of publication of application: 07.09.2016
(73) Proprietor: SABIC Global Technologies B.V., 4612 PX Bergen op Zoom (NL)
(72) Inventor: TUFANO, Carmela, 6160 GA Geleen (NL); BIEMOND, Gerard Jan Eduard, 6160 GA Geleen (NL)
(74) Representative: Algemeen Octrooi- en Merkenbureau B.V.
(86) International application number: PCT/EP2014/071454
(87) International publication number: WO 2015/062825

(56) References cited:
- WO-A1-99/00543
- WO-A2-2009/080821
- US-A- 4 609 591

## Description

The present invention generally relates to glass fibre reinforced polyolefins.
More in particular the present invention relates to long glass fibre reinforced polyolefins such as long glass fibre reinforced polypropylene. Such materials are used in applications requiring high stiffness, such as for example bumper facia, instrument panel carriers and other automotive parts.
Long glass fibre reinforced polypropylene materials are known per se and for example commercially available from SABIC Innovative Plastics under the brand name Stamax. These long glass fibre reinforced polypropylene materials are available as pellets comprising a core and a polypropylene sheath surrounding said core, wherein the core comprises glass fibres extending in a longitudinal direction of the pellet and an impregnating agent.

WO 2009/080281 discloses a method for the manufacture of said type of long glass fibre reinforced polypropylene materials. That method comprises the subsequent steps of:
a) unwinding from a package of at least one continuous glass multifilament strand containing at most 2% by mass of a sizing composition;
b) applying from 0.5 to 20% by mass of an impregnating agent to said at least one continuous glass multifilament strand to form an impregnated continuous multifilament strand;
c) applying a sheath of thermoplastic polymer around the impregnated continuous multifilament strand to form a sheathed continuous multifilament strand; characterised in that the impregnating agent is non-volatile, has a melting point of at least 20°C below the melting point of the thermoplastic matrix, has a viscosity of from 2.5 to 100 cS at application temperature, and is compatible with the thermoplastic polymer to be reinforced.

A viscosity of from 2.5 to 100 cS corresponds to a viscosity of 2.5 x 10⁻⁶ - 100 x 10⁻⁶ m²/s at application temperature.

According to WO 2009/080281, the sheathed continuous glass multifilament strand may be cut into pellets having a length of from 2 to 50mm, preferably from 5 to 30mm, more preferably from 6 to 20mm and most preferably from 10 to 15mm.

Another process to manufacture long glass fibre reinforced polypropylene materials is based on what is known as a pultrusion process. In such a process continuous glass multifibre strands are pulled through a molten resin in such a manner that the individual filaments are fully dispersed into said resin. Examples of such processes are disclosed in EP1364760, NL1010646 and WO 2008/089963.

The term "multifilament strand" as used in WO2009/080821 and the term "multifibre strand" as used should be regarded as synonyms and referring to the same type of material, which are often also referred to as roving.

An important difference between the pultrusion grade long glass fibre reinforced polypropylene materials and the long glass fibre reinforced polyolefin materials according to the present invention is that the glass fibres in the present invention are not dispersed in the polyolefin. This dispersion will only take place once the materials are moulded into finished or semi-finished parts in downstream conversion processes, such as for example injection moulding.

To allow a proper dispersion of the glass fibres in such downstream conversion processes the core of the pellets not only contains the glass fibres but also what is referred to as an impregnating agent. The impregnating agent facilitates a proper dispersion of the glass fibres during the moulding of the (semi) finished article. The impregnating agent is an important component of these long glass fibre reinforced polyolefin materials.

First of all, if the dispersion of the glass fibres in the downstream process is insufficient this will result in agglomerates of glass fibres in the end product, resulting in a poor visible appearance, so called "white spots", and possibly even loss or reduction of mechanical properties.

Secondly, if the impregnating agent does not sufficiently couple the glass fibres to each other and to the polyolefin sheath then, upon subjecting the pellets (which is the form of the composition according to the present invention) to repetitive mechanical loads, glass fibres may separate from the pellets. Such repetitive mechanical loads may occur for example during transport of the pellets through a piping system, or a vibrating conveyor means, such as a vibrating conveyor belt. Further repetitive mechanical loads occur when a number of pellets are shaken, stirred or when the pellets are filled into a suitable transport container, such as for example an octabin. In addition to that the transport container may be subject to vibrations during transport which may be another cause of glass filaments separating from the pellet. It should be understood that several variations of the above examples may also be considered as repetitive mechanical loads. The repetitive mechanical loads are usually random in nature. Of particular importance is the separation of glass fibres from the pellets during transport of the pellets through a piping system because the separated filaments may cause blocking of the piping system and/or of filters, valves, outlets and the like that are used in the piping system. Such blocking may result in down time of the equipment and possible loss of production capacity. The problem of glass fibres separating from the pellet is often referred to as the "free glass" problem.

So in effect the impregnating agent has at least two key functions, the first one being to effectively couple the glass fibres to each other and to the polyolefin sheath in the pellet and the second one being to provide a sufficient dispersion of the glass fibres in downstream conversion processes.

Examples of suitable impregnating agents are disclosed in WO 2009/080281. WO 2009/080281 specifically discloses that the impregnating agent may be a blend of 30 mass% of a hyper-branched polymer (Vybar 260, available from Baker Hughes) and 70 mass% of paraffin (Paralux oil, available from Chevron). A disadvantage of the impregnating agent of WO 2009/080281 is that it requires off-site blending of the individual components, adding a further step in the logistic chain of the process and consequently making such impregnating agent even more expensive. In general it would be preferred to use a single component impregnating agent so as to overcome mixing issues, like de-mixing of the components, storage issues and more complex logistics.

WO 99/00543 discloses a nonaqueous sizing composition for application to glass reinforcing fibers comprising (a) one or more film formers that are miscible with the polymer to be reinforced; and (b) one ore more coupling agents. The film formers may be selected from the group consisting of amorphous waxes, microcrystalline waxes, maleated low molecular weight polypropylenes, hydrocarbon resins. The sizing composition of this document is a material that is applied directly on the glass fibers during their manufacture process. Hence, the sizing composition disclosed in WO 99/00543 is not to be considered as an impregnating agent as defined herein. Rather the impregnating agent of the present invention is a separate component of to the glass fibre reinforced polyolefin composition according to the present invention and during the manufacture of said composition said impregnating agent is applied on the glass multifibre strand (roving) comprised of glass fibers that contain a sizing.

In view of the important functions of the impregnating agent there is a continuous need for further impregnating agents that fulfill at least the above mentioned functions, yet which at the same time allow the manufacture of glass fibre reinforced polyolefin materials in a cost-effective manner.

It is therefore an object to provide a long glass fibre reinforced polyolefin comprising a core and a polyolefin sheath surrounding said core, wherein the core comprises glass fibres extending in a longitudinal direction of the pellet and an impregnating agent that meets one or more of the following:
- good dispersion of the fibres in articles manufactured from said long glass fibre reinforced polyolefin,
- low free glass caused by the pellets when such pellets are subjected to repetitive mechanical loads,
- low material cost,
- good mechanical properties of articles manufactured from the composition
- acceptable speed of manufacture
- acceptable emission and/or odor properties

The present inventors have now found that at least one of these objects can be met with a glass fibre reinforced polyolefin composition comprising a core and a polyolefin sheath surrounding said core, wherein the core comprises glass fibres and an impregnating agent, wherein the impregnating agent contains at least 70 wt% of microcrystalline wax based on the weight of the impregnating agent. In that respect it is to be understood that the microcrystalline wax may be a single microcrystalline wax or a blend of several microcrystalline waxes. It should be understood that the impregnating agent is a separate component in the composition and should not be confused with the sizing composition (sizing) that is normally applied on the surface of the glass fibers during the manufacture thereof. In that respect the term "glass fibers" should be understood as meaning glass fibers having a glass core and a sizing composition in contact with said glass core. The use of sizing in the manufacture of glass fibers is well known, for example from WO 99/00543, and is even essential for the manufacture of rovings, also referred to as glass multifibre strands. Or, without the presence of a sizing it is impossible to manufacture glass fibers than can be combined into a rocing and wound on a bobbin.

So, more specifically the present invention concerns a glass fibre reinforced polyolefin composition comprising a core and a polyolefin sheath surrounding said core, wherein the core comprises glass fibres and an impregnating agent, wherein the impregnating agent contains at least 70 wt% of microcrystalline wax based on the weight of the impregnating agent and wherein the glass fibers comprise a glass core and a sizing composition in contact with said glass core.

Microcrystalline waxes are well known materials. In general a microcrystalline wax is a refined mixture of solid saturated aliphatic hydrocarbons, and produced by de-oiling certain fractions from the petroleum refining process. Microcrystalline waxes differ from refined paraffin wax in that the molecular structure is more branched and the hydrocarbon chains are longer (higher molecular weight). As a result the crystal structure of microcrystalline wax is much finer than paraffin wax, which directly impacts many of the mechanical properties of such materials. Microcrystalline waxes are tougher, more flexible and generally higher in melting point compared to paraffin wax. The fine crystalline structure also enables microcrystalline wax to bind solvents or oil and thus prevents the sweating out of compositions. Microcrystalline wax may be used to modify the crystalline properties of paraffin wax.

Microcrystalline waxes are also very different from so called iso-polymers. First of all, microcrystalline waxes are petroleum based whereas iso-polymers are poly-alphaolefins. Secondly iso-polymers have a very high degree of branching of above 95%, whereas the amount of branching for microcrystalline waxes generally lies in the range of from 40 - 80 wt%. Finally, the melting point of iso-polymers generally is relatively low compared to the melting temperature of microcrystalline waxes. All in all, microcrystalline waxes form a distinct class of materials not to be confused either by paraffin or by iso-polymers.

The remaining at most 30wt% of impregnating agent may contain a natural or synthetic wax or an iso-polymer. Typical natural waxes are animal waxes such as bees wax, lanolin and tallow, vegetable waxes such as carnauba, candelilla, soy, mineral waxes such as paraffin, ceresin and montan. Typical synthetic waxes include ethylenic polymers such as polyethylene wax or polyol ether-ester waxes, chlorinated naphtalenes and Fisher Tropsch derived waxes. A typical example of an iso-polymer, or hyper-branched polymer, is Vybar 260 mentioned above. In an embodiment the remaining part of the impregnating agent contains or consists of one or more of a highly branched poly-alpha-olefin, such as a polyethylene wax, paraffin.

Since the impregnating agent is a separate component in the glass fibre reinforced polyolefin composition the impregnating agent typically does not contain (a) coupling agent(s), such as for example silanes, more in particular amine functional silanes, even more in particular organofunctional silanes, 3-glycidoxypropylltrimethoxy silane, 3-methacryloxypropyltrimethoxy silane, or 3-aminopropyltriethoxy silane. Such silanes being disclosed in WO 99/00543.

In a preferred embodiment the impregnating agent comprises at least 80wt%, more preferably at least 90wt% or even at least 95wt% or at least 99wt% of microcrystalline wax. It is most preferred that the impregnating agent substantially consists of microcrystalline wax. In an embodiment the impregnating agent does not contain paraffin. The term substantially consists of is to be interpreted such that the impregnating agent comprises at least 99.9 wt% of microcrystalline wax, based on the weight of the impregnating agent.

The microcrystalline wax preferably has one or more of the following properties:
- a drop melting point of from 60 to 90 °C as determined in accordance with ASTM D127
- a congealing point of from 55 to 90 °C as determined in accordance with ASTMD938
- a needle pen penetration at 25°C of from 7 to 40 tenths of a mm as determined in accordance with ASTM D1321
- a viscosity at 100°C of from 10 to 25 mPa.s as determined in accordance with ASTM D445
- an oil content of from 0 to 5 wt% preferably from 0 to 2wt% based on the weight of the microcrystalline wax as determined in accordance with ASTM D721

In an even more preferred embodiment the microcrystalline wax has all these properties in combination.

The amount of impregnating agent may vary and is typically in the range of from 0.5 to 20wt%, preferably from 0.8 to 7wt% based on the total weight of the composition.
The amount of impregnating agent may also be expressed relative to the weight of the glass fibres. In an embodiment the amount of impregnating agent is from 5 to 15 wt%, more preferably from 7 to 15 wt% based on the weight of glass fibres.

Preferably the impregnating agent fulfills the requirements as set out in WO2009/080281, i.e. that the impregnating agent is compatible with the polyolefin of the polyolefin sheath, is non-volatile, has a melting point of at least 20 °C below the melting point of the polyolefin of the polyolefin sheath and has a viscosity of from 2.5 to 100cS at application temperature. The requirement of compatibility is met given that the impregnating agent comprises at least 70wt% of microcrystalline wax.

The polyolefin of the polyolefin sheath is preferably polypropylene. Any polypropylene is suitable for use as the sheath material. For example, the polypropylene may be a propylene homopolymer, a propylene - alpha olefin random copolymer, such as a propylene - ethylene random copolymer, impact propylene copolymers, sometimes referred to as heterophasic propylene copolymers, propylene block-copolymers.

The material of the sheath may further contain additives and/or stabilisers like antioxidants, UV stabilisers, flame retardants, pigments, dyes, adhesion promoters like modified polypropylene, in particular maleated polypropylene, antistatic agents, mold release agents, nucleating agents and the like.

In a particular embodiment the material of the sheath may contain further reinforcing additives like inorganic reinforcing agents such as talc, short glass fibres and glass, or organic reinforcing agents such as aramid fibres, polyester fibres, and carbon fibres. Typically sheath materials may contain up to about 30 wt% based on the weight of sheath material of such reinforcing additive.

The long glass fibre reinforced polyolefin according to the present invention typically has from 10 to 70 wt% of glass fibres, based on the total weight of the composition.

For the avoidance of doubt it should be understood that the term "sheath" is to be considered as a layer that tightly accommodates the core.

The glass fibres used in the present invention typically have a diameter in the range of from 5 to 50 micrometer, preferably from 10 to 30 micrometer such as from 15 to 25 micrometer. A thinner glass fibre generally leads to higher aspect ratio (length over diameter ratio) of the glass fibres in the final product prepared from the glass fibre reinforced composition, yet thinner glass fibres may be more difficult to manufacture and/ or handle. In the method according to the present invention it is preferred that the glass fibres originate from glass multifibre strands, also referred to as glass rovings.
Preferably, the glass multifibre strand(s) or rovings contain from 500 to 10000 glass filaments per strand, more preferably from 2000 to 5000 glass filaments per strand. The linear density of the multifibre strand preferably is from 1000 to 5000 tex, corresponding to 1000 to 5000 grams per 1000 meter. Usually the glass fibres are circular in cross section meaning the thickness as defined above would mean diameter.
Rovings are generally available and well known to the skilled person. Examples of suitable rovings are the Advantex products designated for example as SE4220, SE4230 or SE4535 and available from 3B Fibre Glass company, available as 1200 or 2400 tex, or TUFRov 4575, TUFRov 4588 available from PPG Fibre Glass.

The composition according to the present invention is preferably in the form of one or more pellets. The pellets preferably have a length of from 1 to 40 mm such as from 5 to 20 and preferably from 10 to 18 mm. The skilled person will understand that pellets preferably are substantially cylindrical with a circular cross section, yet other cross sectional shapes shapes also fall within the scope of the present invention.

In the pellets, the glass fibres generally extend in in the longitudinal direction as a result of which they lie substantially in parallel to one another. The glass fibres extending in a longitudinal direction have a length of between 95% and 105%, more in particular between 99% and 101% of the length of a pellet. Ideally the length of the fibres is substantially the same as the length of the pellet, yet due to some misalignment, twisting, or process inaccuracies the length may vary within the aforementioned range.

The present invention further provides a method for producing pellets of a glass fibre reinforced polyolefin composition, the pellets comprising a core and a polyolefin sheath surrounding said core, wherein the core comprises glass fibres and an impregnating agent, wherein said glass fibres extend in a longitudinal direction of the pellets and wherein the impregnating agent contains at least 70 wt% of microcrystalline wax based on the total weight of impregnating agent, the method comprising the steps of
a) providing at least one continuous glass multifibre strand,
b) applying the impregnating agent to said at least one continuous multifibre strand,
c) applying a sheath of polyolefin around the strand obtained in step b) so as to form a sheathed continuous multifibre strand,
d) cutting the sheathed continuous multifibre strand so as to form the pellets

This method is typically known as a wire-coating process. Wire-coating is done by passing the continuous glass multifibre strand (roving) through a wire-coating die. Said die is attached to an extruder which supplies molten thermoplastic polymer, in the present invention polyolefin, through an opening substantially perpendicular to the direction of the glass multifibre strand through the die. As such the thermoplastic polymer basically sheaths or encapsulates the glass multifibre strand which is the "wire" to be "coated". Such a process is also disclosed in WO 99/00543, the essential difference being that WO 99/00543 does not require the application of impregnating agent prior to the sheathing with the thermoplastic polyolefin.

The skilled person will understand that the core of the pellet comprising the glass fibres and the impregnating agent will only be surrounded by the polyolefin sheath in the longitudinal direction. Hence, the core of the pellet is exposed to the surrounding at the two cutting planes, or cross sectional surfaces corresponding to the positions where the pellet was cut. It is for this reason that upon insufficient coupling of the glass fibres to the polyolefin sheath the glass fibres may separate from the pellet resulting in free glass as explained above.

In an embodiment the glass fibre reinforced polyolefin composition comprises a core and a polyolefin sheath surrounding said core, wherein the core consists of glass fibres and an impregnating agent, wherein the impregnating agent contains at least 70 wt% of microcrystalline wax based on the weight of the impregnating agent.
The glass fibre reinforced polyolefin composition according to the present invention may be used for the manufacture of articles or structural parts by known down-stream processing techniques. Such techniques include injection moulding, extrusion moulding, compression moulding and the like.

Typical applications of the composition of the present invention are structural parts requiring a high stiffness.

For example the composition of the present invention can be used for the manufacture of automotive parts, like bumpers, instrument panel carriers, door modules, tailgates, front-end modules, gas pedal boxes, airbag housing, air conduits, sun-roof structures, batter-boxes and the like.

Alternatively the composition of the present invention can be used for the manufacture of rods, sheets, pipes or pipes forming the basic building blocks for any structural application either as automotive or non-automotive.

In addition the composition of the present invention may be used for the manufacture of domestic appliances like washing machines, wash dryers, electrical appliances like coffeemakers, toasters, refrigerators, vacuum cleaners and the like.

The invention further relates to the use of a microcrystalline wax, preferably having one or more of the following properties:
- a drop melting point of from 60 to 90°C as determined in accordance with ASTM D127
- a congealing point of from 55 to 90°C as determined in accordance with ASTMD938
- a needle pen penetration at 25°C of from 7 to 40 tenths of a mm as determined in accordance with ASTM D1321
- a viscosity at 100°C of from 10 to 25mPa.s as determined in accordance with ASTM D445
- an oil content of from 0 to 5wt% based on the weight of the microcrystalline wax as determined in accordance with ASTM D721,
as a component in a long glass fibre reinforced polyolefin composition. Preferably such polyolefin composition is a polypropylene composition. The composition may be manufactured either by the method as disclosed herein or alternatively with a pultrusion or any other suitable process. Such a polyolefin composition may contain from 20 to 70 wt% of glass fibres, based on the total weight of the composition, and the microcrystalline wax may be used in an amount from 5 to 15 wt%, more preferably from 7 to 15 wt% based on the weight of glass fibres.

The present invention will now be further explained by the following figures and examples which should not be considered as limiting the present invention in any way.
Figure 1 schematically shows a pellet in accordance with the present invention.
Figure 2 schematically shows some of the glass filaments of the pellet of Figure 1.

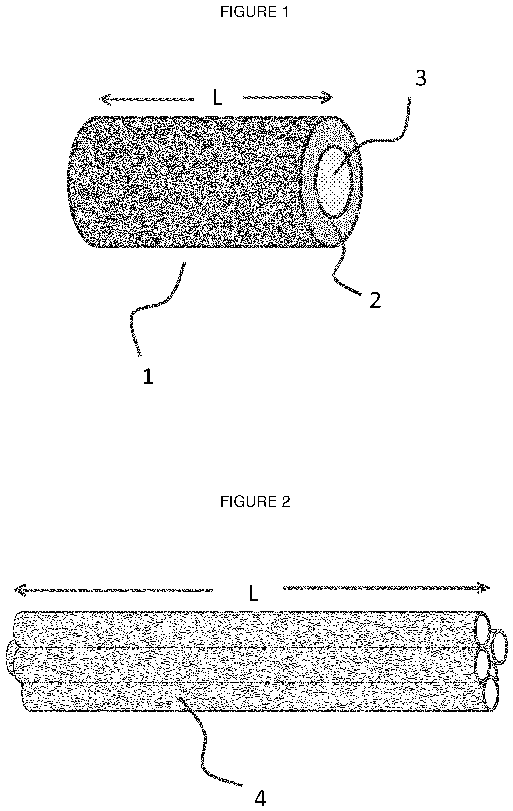

Figure 1 is a schematic drawing (not to scale) of a pellet of the composition in accordance with the present invention. Pellet 1 comprises a polyolefin sheath 2 surrounding core 3 in a longitudinal direction, indicated with arrows L. Core 3 comprises glass fibres 4 which extend in the longitudinal direction L of pellet 1. From Figure 1 it can be seen that the at cutting planes the core is exposed to the surrounding and not covered with polyolefin sheath.

Figure 2 is a schematic drawing (not to scale) of several glass fibres 4 extending in the longitudinal direction L of pellet 1. Glass fibres 4 in the composition according to the present invention not only extend in longitudinal direction L but also lie substantially parallel to one another, as schematically illustrated in Figure 2. In view of the method for manufacturing of pellets 1 as disclosed herein, glass fibres 4 will therefore have a length substantially the same as the length of pellet 1 in longitudinal direction L. Due to production tolerances and non-ideal parallel orientation (for example because of some twisting) glass fibres 4 generally have a length of between 95% and 105% of the length of pellet 1. Glass fibres 4 comprise a glass core 4 and a sizing composition surrounding the glass core. The sizing composition is usually present in amount of at most about 2wt% relative to the weight of the glass fibres. The sizing composition may fully encapsulate the glass core, yet a skilled person will understand that the glass core 4 may not be fully surrounded by the sizing composition and that in addition the sizing composition may form a layer encapsulating more than one glass cores.
The impregnating agent (not shown) is present between some or all of the individual glass fibres 4 and/or between glass fibres 4 and polyolefin sheath 2. As such the impregnating agent couples glass fibres 4 not only with each other, but also with polyolefin sheath 2.

### Experiments

Glass fibre reinforced polyolefin compositions in the form of pellets were manufactured in accordance with the method disclosed in WO 2009/080281.

The polyolefin sheath material was SABIC PP579S polypropylene, available from SABIC and having a melt flow as determined according to ISO 1133 (2.16kg, 230 °C) of 47 g/10min.

The glass multifibre strand (roving) was SE4230 available from 3B Fibre Glass Company. The glass fibres in the multifibre strand had a diameter of about 19 micrometer and having a density of about 3000 tex, which can be calculated to correspond to approximately 4000 fibres per multifibre strand.

The amount of impregnating agent was 9.2 wt% based on the weight of the glass multifibre strand. This corresponds to about 5.5 wt% based on a composition containing 60wt% of glass.

### Free glass

The amount of free glass was measured as follows. 1 kg of pellets is fed to a first container and then transported by means of air drag to a second container through a flexible pipe of about 2.5m long. The air is filtered through a device filter with sufficient pore size to capture any glass fibre separating from the pellets. The pellets are then transported to the first container again and the procedure is repeated for four additional times. The weight of the device filter is measured before and after the test so that it can be established how much glass fibres have separated from the kilo of pellets. In an alternative manner the device filter is vacuum cleaned and the amount of glass filaments is separated and weighed. Both methods yield the same results. The "free glass" is reported in gram per kilogram.

### Push out

An alternative manner for determining an effective coupling of the glass fibres to the sheath is referred to herein as the "push out" test, which is performed as follows.
One hundred pellets are randomly selected by an operator from a batch of pellets. Next, for each of the hundred pellets the operator uses a needle having a blunt tip with a surface area slightly smaller than the surface area of the core of the pellet, i.e. the surface area occupied by the glass fibres and then tries to push out the glass fibres using this needle. The amount of successful push outs per 100 pellets is reported. This method is more subjective than the free glass method, for reason that the outcome of the test may depend on the force that the operator uses when trying to push out the glass fibres. It was found however that this test gives a fair indication for the tendency of glass fibres separating from the pellets. The "push out" is reported in number of push outs per hundred pellets.

Free glass and push out were tested on both untreated pellets, i.e. virgin pellets obtained after their manufacture, as well on treated pellets. Pellet treatment consisted in maintaining virgin pellets at a temperature of 100 °C for a period of 2 hours.

Charpy (notched/ un-notched) impact testing was performed according to ISO 179/1e at 23 °C and -30 °C.

Tensile property testing (tensile modulus, tensile strength, elongation at break, etc) was performed according to ISO 527/1A at temperatures of 23°C, 80°C, 120°C.

Isotropic tensile property testing was performed according to ISO 527/1B at 23°C and at 0, 45 and 90 degree angles.

### White spots

White spot determination was carried out by moulding of fifteen plates having a length of 310mm, a width of 270 mm and a thickness of 3mm. The injection nozzle of the injection moulding machine positioned at the centre of the plate(s). The presence of white spots was carried out visually on the surface opposite the surface of the injection nozzle. Injection moulding conditions were constant for all plates so as to make sure a good comparison can be made. Typical conditions can be found in the table 1 below. A skilled person will be able to select further appropriate settings like pressure, injection speeds, cycle time etc. As long as the same conditions are selected for all plates a direct comparison with regards to white spots is possible. Although not required, it is preferred that conditions are selected such that white spots are generated relatively easy.

**Table 1**

| | |
|---|---|
| Feed temperature | 260 °C |
| Mould temperature at injection side | 40 °C |
| Mould temperature at closing side | 50 °C |
| Injection pressure | 1300 bar |

The following commercially available microcrystalline waxes were used in the experiments.

**Table 2**

| | Drop melting point | Congealing point | Penetration @ 25°C | Viscosity | | Oil content |
|---|---|---|---|---|---|---|
| | | | | 100 °C | 150°C | |
| | [°C] | [°C] | [mm] | mPa*s | mPa*s | Wt% |
| A | 90 | n.a. | 7*0.1 | 20.1 | | 0.5 |
| B | 60 | 57 | 35*0.1 | 18 | | 3 |
| C | 82 | 77.8 | 18*0.1 | 16.7 | | 1.2 |
| D | 77-84 | 74-80 | 13-25*0.1 | 10-16 | 8.5 | |
| E | 79-85 | 73-80 | 25-35*0.1 | 20 | 9.5 | |
| F | 77-84 | 70-76 | 20-30*0.1 | 12.5 | 8.3 | |

In a first run three experiments were performed as shown in the table below.
The pellet properties were measured on the actual pellets whereas the mechanical properties are based on the pellets diluted with an amount of polypropylene that was also used for the polyolefin sheath such that a glass content of 30wt% in the final moulding was obtained.

**Table 3**

| # | | | 60YM240 | 1 | 2 |
|---|---|---|---|---|---|
| *Pellet properties* | | | | | |
| IA | | | Ref | B (100%) | A (100%) |
| Glass% | | [wt%] | 60 | 60 | 60 |
| Pullout (untreated) | | [1/100] | 20 | 9 | 0 |
| Pullout (treated) | | [1/100] | 20 | 6 | 1 |
| Free glass (untreated) | | [g/kg] | 0.1466 | 0.0687 | 0.0822 |
| Free glass (treated) | | [g/kg] | 0.0989 | 0.0533 | 0.0536 |

| *Mechanical properties after dilution to glass content of 30 wt%* | | | | | |
|---|---|---|---|---|---|
| WS | | [#] | 8.2 | 12 | 6.9 |
| Charpy Notched | 23°C | [kJ/m2] | 26 | 30 | 27 |
| | -30°C | | 38 | 33 | 28 |
| Charpy Un-notched | 23°C | [kJ/m2] | 64 | 57 | 63 |
| | -30°C | | 44 | 44 | 43 |
| Tensile Modulus | 23°C | [MPa] | 6984 | 6911 | 6954 |
| | 80°C | | 4455 | 4651 | 4754 |
| | 120°C | | 3594 | 3358 | 3332 |
| Tensile Strength | 23°C | [MPa] | 115 | 114 | 116 |
| | 80°C | | 68 | 69 | 69 |
| | 120°C | | 46 | 46 | 44 |
| Elongation at break | 23°C | [%] | 2.5 | 2.5 | 2.6 |
| | 80°C | | 3.1 | 3.0 | 3.0 |
| | 120°C | | 4.8 | 4.9 | 4.9 |

The reference example corresponds to the Stamax 60YM240 product, commercially available from SABIC Innovative Plastics.

**Table 4**

| # | | | 60YM240 | 4 | 5 | 6 | 7 | 8 | 9 |
|---|---|---|---|---|---|---|---|---|---|
| Pellet properties | | | | | | | | | |
| IA | | | Ref | A (100%) | B (100%) | C (100%) | D (100%) | E (100%) | F (100%) |
| Glass% | | [wt%] | 60 | 60 | 60 | 60 | 60 | 60 | 60 |
| Pullout (untreated) | | [1/100] | 4 | 0 | 0 | n.a. | 0 | 2 | 0 |
| Pullout (treated) | | [1/100] | 1 | 1 | 0 | n.a. | 0 | 1 | 0 |
| Free glass (untreated) | | [g/kg] | 0.0852 | 0.0785 | 0.0678 | n.a. | 0.0716 | 0.077 | 0.0664 |
| Free glass (treated) | | [g/kg] | 0.0662 | 0.0606 | 0.0571 | n.a. | 0.0564 | 0.0745 | 0.0509 |

| *Mechanical properties after dilution to glass content of 30 wt%* | | | | | | | | | |
|---|---|---|---|---|---|---|---|---|---|
| WS | | [#] | 11.3 | 11.0 | 12.3 | 6.8 | 7.9 | 11.0 | 10.2 |
| Charpy Notched | 23°C | [kJ/m2] | 23 | 25 | 24 | 25 | 23 | 25 | 25 |
| | -30°C | | 29 | 30 | 28 | 31 | 28 | 30 | 31 |
| Charpy Un-notched | 23°C | [kJ/m2] | 58 | 57 | 55 | 56 | 59 | 64 | 63 |
| | -30°C | | 38 | 40 | 44 | 37 | 41 | 37 | 44 |
| Tensile Modulus | 23°C | [MPa] | 6575 | 6843 | 6412 | 6602 | 6575 | 6632 | 6900 |
| | 80°C | | 4355 | 4759 | 4117 | 4344 | 4196 | 4496 | 4468 |
| | 120°C | | 3275 | 3147 | 2856 | 2931 | 2912 | 3023 | 3017 |
| Tensile Strength | 23°C | [MPa] | 113 | 116 | 110 | 113 | 113 | 114 | 114 |
| | 80°C | | 64 | 67 | 62 | 65 | 65 | 65 | 65 |
| | 120°C | | 43 | 38 | 37 | 38 | 38 | 38 | 38 |
| Elongation at break | 23°C | [%] | 2.6 | 2.6 | 2.6 | 2.5 | 2.5 | 2.6 | 2.5 |
| | 80°C | | 2.9 | 2.9 | 3.1 | 3.1 | 2.9 | 3.0 | 3.1 |
| | 120°C | | 4.7 | 4.2 | 4.4 | 4.8 | 4.2 | 4.9 | 4.4 |

The reference example corresponds to the Stamax 60YM240 product, commercially available from SABIC Innovative Plastics.

## Claims

1. A glass fibre reinforced polyolefin composition comprising a core and a polyolefin sheath surrounding said core, wherein the core comprises glass fibres and an impregnating agent, wherein the impregnating agent contains at least 70 wt% of microcrystalline wax based on the weight of the impregnating agent, wherein the glass fibers comprise a glass core and a sizing composition in contact with said glass core.

2. The composition according to claim 1 wherein the impregnating agent comprises at least 80, more preferably at least 90, more preferably at least 95 wt% of microcrystalline wax.

3. The composition according to claim 1 or 2 wherein the polyolefin is a polypropylene.

4. The composition according to any one or more of claims 1 - 3 wherein the microcrystalline wax has one or more of the following properties,
- a drop melting point of from 60 to 90 °C as determined in accordance with ASTM D127
- a congealing point of from 55 to 90 °C as determined in accordance with ASTMD938
- a needle pen penetration at 25 °C of from 7 to 40 tenths of a mm as determined in accordance with ASTM D1321
- a viscosity at 100 °C of from 10 to 25mPa.s as determined in accordance with ASTM D445
- an oil content of from 0 to 5wt% based on the weight of the microcrystalline wax as determined in accordance with ASTM D721

5. The composition according to any one or more of claims 1 - 4 wherein the glass fibres have a diameter in the range of from 5 to 50 micrometer, preferably from 10 to 30 micrometer such as from 15 to 25 micrometer.

6. The composition according to any one or more of claims 1 - 5 containing from 0.5 - 20 wt%, preferably from 0.8 to 7 wt% of impregnating agent based on the total weight of the composition.

7. The composition according to one or more of claims 1 - 6 wherein the impregnating agent is non-volatile, has a melting point of at least 20 °C below the melting point of the polyolefin of the polyolefin sheath and has a viscosity of from 2.5 x 10⁻⁶ - 100 x 10⁻⁶ m²/s (2.5 to 100cS) at application temperature.

8. The composition according to one or more of claims 1 - 7 wherein the composition is in the form of one or more pellets, preferably having a length of from 1 to 40 mm such as from 5 to 20 and preferably from 10 to 18 mm.

9. The composition according to claim 8 wherein the glass fibres extend in a longitudinal direction of the pellet and have a length of between 95% and 105% of the length of a pellet.

10. The composition according to one or more of claims 1 - 9 wherein said composition does not contain one or more of a coupling agent.

11. The composition according to one or more of claims 1 - 10 wherein the glass fibers consist of a glass core and a sizing covering at least a portion of the surface of said glass core.

12. Method for producing pellets of a glass fibre reinforced polyolefin composition, the pellets comprising a core and a polyolefin sheath surrounding said core, wherein the core comprises glass fibres and an impregnating agent, wherein said glass fibres extend in a longitudinal direction of the pellets and wherein the impregnating agent contains at least 70 wt% of microcrystalline wax based on the total weight of impregnating agent, wherein the glass fibers comprise a glass core and a sizing composition in contact with said glass core, the method comprising the steps of
a) providing at least one continuous glass multifibre strand,
b) applying the impregnating agent to said at least one continuous multifibre strand,
c) applying a sheath of polyolefin around the strand obtained in step b) so as to form a sheathed continuous multifibre strand,
d) cutting the sheathed continuous multifibre strand so as to form the pellets

13. A structural part obtainable by moulding the composition of one or more of claims 1 - 11 or the pellets obtainable by the method of claim 12.

14. The structural part of claim 13 wherein said structural part is an automotive part, such as a bumper, instrument panel carrier, door module, tailgate, front-end module, gas- pedal box, airbag house, air conduit, sun-roof structure, battery-tray-holder or wherein said structural part is comprised in domestic appliances, such as coffee makers, vacuum cleaners, washing machines, wash dryers.

15. Use of a microcrystalline wax, preferably having one or more of the following properties:
- a drop melting point of from 60 to 90 °C as determined in accordance with ASTM D127
- a congealing point of from 55 to 90 °C as determined in accordance with ASTMD938
- a needle pen penetration at 25 °C of from 7 to 40 tenths of a mm as determined in accordance with ASTM D1321
- a viscosity at 100 °C of from 10 to 25mPa.s as determined in accordance with ASTM D445
- an oil content of from 0 to 5wt% based on the weight of the microcrystalline wax as determined in accordance with ASTM D721
as an impregnating agent in a long glass fibre reinforced polyolefin composition comprising a core and a polyolefin sheath surrounding said core, wherein the core comprises glass fibres comprise a glass core and a sizing composition in contact with said glass core.

## Patentansprüche

1. Glasfaserverstärkte Polyolefinzusammensetzung, umfassend einen Kern und eine den Kern umgebende Polyolefinhülle, wobei der Kern Glasfasern und ein Imprägniermittel umfasst, wobei das Imprägniermittel mindestens 70 Gew.-% mikrokristallines Wachs, bezogen auf das Gewicht des Imprägniermittels, enthält, wobei die Glasfasern einen Glaskern und eine Schlichtezusammensetzung in Kontakt mit dem Glaskern umfassen.

2. Zusammensetzung nach Anspruch 1, wobei das Imprägniermittel mindestens 80, weiter bevorzugt mindestens 90, weiter bevorzugt mindestens 95 Gew.-% mikrokristallines Wachs umfasst.

3. Zusammensetzung nach Anspruch 1 oder 2, wobei es sich bei dem Polyolefin um ein Polypropylen handelt.

4. Zusammensetzung nach einem oder mehreren der Ansprüche 1-3, wobei das mikrokristalline Wachs eine oder mehrere der folgenden Eigenschaften aufweist:
- einen Tropfpunkt von 60 bis 90 °C, wie gemäß ASTM D127 bestimmt,
- einen Erstarrungspunkt von 55 bis 90 °C, wie gemäß ASTM D938 bestimmt,
- eine Nadelstiftpenetration bei 25 °C von 7 bis 40 Zehntel eines mm, wie gemäß ASTM D1321 bestimmt,
- eine Viskosität bei 100 °C von 10 bis 25 mPa.s, wie gemäß ASTM D445 bestimmt,
- einen Ölgehalt von 0 bis 5 Gew.-%, bezogen auf das Gewicht des mikrokristallinen Wachses, wie gemäß ASTM D721 bestimmt.

5. Zusammensetzung nach einem oder mehreren der Ansprüche 1-4, wobei die Glasfasern einen Durchmesser im Bereich von 5 bis 50 Mikrometer, vorzugsweise von 10 bis 30 Mikrometer, wie von 15 bis 25 Mikrometer, aufweisen.

6. Zusammensetzung nach einem oder mehreren der Ansprüche 1-5, enthaltend 0,5-20 Gew.-%, vorzugsweise 0,8 bis 7 Gew.-%, Imprägniermittel, bezogen auf das Gesamtgewicht der Zusammensetzung.

7. Zusammensetzung nach einem oder mehreren der Ansprüche 1-6, wobei das Imprägniermittel nichtflüchtig ist, einen Schmelzpunkt aufweist, der mindestens 20 °C unter dem Schmelzpunkt des Polyolefins der Polyolefinhülle liegt, und eine Viskosität von 2,5 × 10⁻⁶ - 100 x 10⁻⁶ m²/s (2,5 bis 100 cS) bei Anwendungstemperatur aufweist.

8. Zusammensetzung nach einem oder mehreren der Ansprüche 1-7, wobei die Zusammensetzung in Form von einem oder mehreren Pellets, vorzugsweise mit einer Länge von 1 bis 40 mm, wie von 5 bis 20 und vorzugsweise von 10 bis 18 mm, vorliegt.

9. Zusammensetzung nach Anspruch 8, wobei sich die Glasfasern in einer Längsrichtung des Pellets erstrecken und eine Länge zwischen 95 % und 105 % der Länge eines Pellets aufweisen.

10. Zusammensetzung nach einem oder mehreren der Ansprüche 1-9, wobei die Zusammensetzung nicht ein oder mehrere Kupplungsmittel enthält.

11. Zusammensetzung nach einem oder mehreren der Ansprüche 1-10, wobei die Glasfasern aus einem Glaskern und einer Schlichte, die mindestens einen Teil der Oberfläche des Glaskerns bedeckt, bestehen.

12. Verfahren zur Herstellung von Pellets einer glasfaserverstärkten Polyolefinzusammensetzung, wobei die Pellets einen Kern und eine den Kern umgebende Polyolefinhülle umfassen, wobei sich die Glasfasern in einer Längsrichtung des Pellets erstrecken und wobei das Imprägniermittel mindestens 70 Gew.-% mikrokristallines Wachs, bezogen auf das Gewicht des Imprägniermittels, enthält, wobei die Glasfasern einen Glaskern und eine Schlichtezusammensetzung in Kontakt mit dem Glaskern umfassen, wobei das Verfahren folgende Schritte umfasst:
a) Bereitstellen mindestens eines kontinuierlichen Glasmultifaserstrangs,
b) Aufbringen des Imprägniermittels auf mindestens einen kontinuierlichen Multifaserstrang,
c) Aufbringen einer Hülle von Polyolefin um den in Schritt b) erhaltenen Strang zur Bildung eines umhüllten kontinuierlichen Multifaserstrangs,
d) Schneiden des umhüllten kontinuierlichen Multifaserstrangs zur Bildung von Pellets.

13. Bauteil, das durch Formen der Zusammensetzung nach einem oder mehreren der Ansprüche 1-11 oder der durch das Verfahren nach Anspruch 12 erhältlichen Pellets erhältlich ist.

14. Bauteil nach Anspruch 13, wobei es sich bei dem Bauteil um ein Autoteil, wie eine Stoßstange, einen Instrumentenbrettträger, ein Türmodul, eine Heckklappe, ein Frontmodul, einen Gaspedalkasten, ein Airbaggehäuse, einen Luftkanal, eine Schiebedachkonstruktion, eine Batterieschalenhalterung, handelt oder wobei das Bauteil in Haushaltsgeräten, wie Kaffeemaschinen, Staubsaugern, Waschmaschinen, Wäschetrocknern, enthalten ist.

15. Verwendung eines mikrokristallinen Wachses, das vorzugsweise eine oder mehrere der folgenden Eigenschaften aufweist:
- einen Tropfpunkt von 60 bis 90 °C, wie gemäß ASTM D127 bestimmt,
- einen Erstarrungspunkt von 55 bis 90 °C, wie gemäß ASTM D938 bestimmt,
- eine Nadelstiftpenetration bei 25 °C von 7 bis 40 Zehntel eines mm, wie gemäß ASTM D1321 bestimmt,
- eine Viskosität bei 100 °C von 10 bis 25 mPa.s, wie gemäß ASTM D445 bestimmt,
- einen Ölgehalt von 0 bis 5 Gew.-%, bezogen auf das Gewicht des mikrokristallinen Wachses, wie gemäß ASTM D721 bestimmt,
als Imprägniermittel in einer langglasfaserverstärkten Polyolefinzusammensetzung, umfassend einen Kern und eine den Kern umgebende Polyolefinhülle, wobei der Kern Glasfasern umfasst, die einen Glaskern und eine Schlichtezusammensetzung in Kontakt mit dem Glaskern umfassen.

## Revendications

1. Composition de polyoléfine renforcée par des fibres de verre comprenant une âme et une gaine en polyoléfine entourant ladite âme, dans laquelle l'âme comprend des fibres de verre et un agent d'imprégnation, l'agent d'imprégnation contenant au moins 70 % en poids de cire microcristalline par rapport au poids de l'agent d'imprégnation, les fibres de verre comprenant une âme en verre et une composition d'ensimage en contact avec ladite âme en verre.

2. Composition selon la revendication 1 dans laquelle l'agent d'imprégnation comprend au moins 80, de préférence encore au moins 90, de préférence encore au moins 95 % en poids de cire microcristalline.

3. Composition selon la revendication 1 ou 2 dans laquelle la polyoléfine est un polypropylène.

4. Composition selon une ou plusieurs revendications quelconques parmi les revendications 1-3 dans laquelle la cire microcristalline a une ou plusieurs des propriétés suivantes,
- un point de fusion/goutte tel que déterminé conformément à la méthode ASTM D127 de 60 à 90 °C
- un point de congélation tel que déterminé conformément à la méthode ASTM D938 de 55 à 90 °C
- une pénétration d'aiguille à 25 °C telle que déterminée conformément à la méthode ASTM D1321 de 7 à 40 dixièmes de mm
- une viscosité à 100 °C telle que déterminée conformément à la méthode ASTM D445 de 10 à 25 mPa.s
- une teneur en huile telle que déterminée conformément à la méthode ASTM D721 de 0 à 5 % en poids par rapport au poids de la cire microcristalline.

5. Composition selon une ou plusieurs revendications quelconques parmi les revendications 1-4 dans laquelle les fibres de verre ont un diamètre dans la plage de 5 à 50 micromètres, de préférence de 10 à 30 micromètres tel que de 15 à 25 micromètres.

6. Composition selon une ou plusieurs revendications quelconques parmi les revendications 1-5 contenant de 0,5 à 20 % en poids, de préférence de 0,8 à 7 % en poids d'agent d'imprégnation par rapport au poids total de la composition.

7. Composition selon une ou plusieurs des revendications 1-6 dans laquelle l'agent d'imprégnation est non volatil, a un point de fusion au moins 20 °C au-dessous du point de fusion de la polyoléfine de la gaine en polyoléfine et a une viscosité de 2,5 x 10⁻⁶-100 x 10⁻⁶ m²/s (2,5 à 100 cSt) à la température d'application.

8. Composition selon une ou plusieurs des revendications 1-7, la composition étant sous la forme d'un ou plusieurs granulés, de préférence ayant une longueur de 1 à 40 mm telle que de 5 à 20 et de préférence de 10 à 18 mm.

9. Composition selon la revendication 8, dans laquelle les fibres de verre s'étendent dans une direction longitudinale du granulé et ont une longueur comprise entre 95 % et 105 % de la longueur d'un granulé.

10. Composition selon une ou plusieurs des revendications 1-9, ladite composition ne contenant pas un ou plusieurs agents de couplage.

11. Composition selon une ou plusieurs des revendications 1-10 dans laquelle les fibres de verre sont constituées d'une âme en verre et d'un ensimage recouvrant au moins une partie de la surface de ladite âme en verre.

12. Procédé pour la production de granulés d'une composition de polyoléfine renforcée par des fibres de verre, les granulés comprenant une âme et une gaine en polyoléfine entourant ladite âme, l'âme comprenant des fibres de verre et un agent d'imprégnation, lesdites fibres de verre s'étendant dans une direction longitudinale des granulés et l'agent d'imprégnation contenant au moins 70 % en poids de cire microcristalline par rapport au poids total de l'agent d'imprégnation, les fibres de verre comprenant une âme en verre et une composition d'ensimage en contact avec ladite âme en verre, le procédé comprenant les étapes consistant à
a) fournir au moins un fil multifibre de verre continu,
b) appliquer l'agent d'imprégnation sur ledit au moins un fil multifibre continu,
c) appliquer une gaine de polyoléfine autour du fil obtenu dans l'étape b) de manière à former un fil multifibre continu gainé,
d) couper le fil multifibre continu gainé de manière à former les granulés.

13. Pièce de structure pouvant être obtenue par moulage de la composition selon une ou plusieurs des revendications 1-11 ou des granulés pouvant être obtenus par le procédé selon la revendication 12.

14. Pièce de structure selon la revendication 13, ladite pièce de structure étant une pièce d'automobile, telle qu'un pare-chocs, un support de tableau de bord, un module de porte, un hayon, un module d'avant-train, une boîte de pédale d'accélérateur, un logement de coussin de sécurité gonflable, un conduit d'air, une structure de toit ouvrant, un porte-support de batterie ou ladite pièce de structure étant incluse dans des appareils ménagers, tels que des cafetières, des aspirateurs, des machines à laver, des sèche-linge.

15. Utilisation d'une cire microcristalline, de préférence ayant une ou plusieurs des propriétés suivantes :
- un point de fusion/goutte tel que déterminé conformément à la méthode ASTM D127 de 60 à 90 °C
- un point de congélation tel que déterminé conformément à la méthode ASTM D938 de 55 à 90 °C
- une pénétration d'aiguille à 25 °C telle que déterminée conformément à la méthode ASTM D1321 de 7 à 40 dixièmes de mm
- une viscosité à 100 °C telle que déterminée conformément à la méthode ASTM D445 de 10 à 25 mPa.s
- une teneur en huile telle que déterminée conformément à la méthode ASTM D721 de 0 à 5 % en poids par rapport au poids de la cire microcristalline
en tant qu'agent d'imprégnation dans une composition de polyoléfine renforcée par de longues fibres de verre comprenant une âme et une gaine en polyoléfine entourant ladite âme, l'âme comprenant des fibres de verre comprenant une âme en verre et une composition d'ensimage en contact avec ladite âme en verre.
